# EUROPEAN PATENT SPECIFICATION

(11) **EP 2 971 596 B1**
(45) Date of publication and mention of the grant of the patent: **15.07.2020**
(21) Application number: 13863682.4
(22) Date of filing: 06.12.2013
(51) Int. Cl.: F01D 17/16, F04D 29/56

(54) **GAS TURBINE ENGINE AND CORRESPONDING METHOD**
GASTURBINENTRIEBWERK UND ENTSPRECHENDES VERFAHREN
MOTEUR À TURBINE À GAZ ET PROCÉDÉ CORRESPONDANT

(30) Priority: 10.03.2013 US 201361775635 P
(43) Date of publication of application: 20.01.2016
(60) Divisional application: 18205709.1
(73) Proprietor: Rolls-Royce Corporation, Indianapolis, Indiana 46225 (US); Rolls-Royce North American Technologies, Inc., Indianapolis, IN 46241 (US)
(72) Inventor: FULAYTER, Roy D., Avon, Indiana 46123 (US); VETTERS, Daniel K., Indianapolis, Indiana 46234 (US); POWER, Bronwyn, Indianapolis, Indiana 46220-4278 (US)
(74) Representative: Gille Hrabal
(86) International application number: PCT/US2013/073531
(87) International publication number: WO 2014/163681

(56) References cited:
- EP-A2- 1 757 775
- WO-A1-2014/078121
- GB-A- 705 150
- GB-A- 1 276 720
- US-A- 2 919 890
- US-A- 3 074 689
- US-A- 3 687 569
- US-A- 3 695 777
- US-A- 4 968 217
- US-A- 5 108 256
- US-A- 6 071 077

## Description

### CROSS REFERENCE TO RELATED APPLICATIONS

### TECHNICAL FIELD

The present disclosure generally relates to gas turbine engine airfoil members having tip clearance features. More particularly, but not exclusively, the present disclosure relates to tip clearance using spherical shapes.

### BACKGROUND

GB 1 276 720 A discloses a turbomachine which has angularly adjustable stator blades connected by arms to a common actuating ring concentric with the machine axis of blades lying on a cone. To reduce friction, a vertex angle is so related to the lengths of arms that the outer ends of the latter during blade adjustment follow paths which when projected on to a plane normal to an axis approximate to circular arcs of radius equal to that of actuating ring. US 3 074 689 A discloses an adjustable nozzle assembly for a gas turbine. US 2 919 890 A discloses a variable nozzle assembly for an axial flow turbo machine. GB 705 150 A discloses a variable guide-blade arrangement for an axial flow turbine. An axial drag regulator for large-volume radial compressors is known from US 5 108 256 A. A device for supporting and sealing pivotable guide blades of turbo-machines is known from US 3 695 777 A. US 6 071 077 A discloses a swept fan blade design for the low pressure compressor rotor or fan rotor stage of a ducted fan gas turbine engine. The swept fan blade has a leading edge swept forward near the hub up to a first radial height, then rearward up to second radial height and finally is swept forward again up to the blade tip. WO 2014/078121 A1 discloses a contoured stator shroud which has a stator chord overhang having a surface which varies in elevation forming a plurality of surface contours, wherein the contours reduce clearance between adjacent vanes during off design performance positioning of the vanes. US 4 968 217 A discloses a variable pitch arrangement to enable reverse pitch settings of fan blades to be achieved without the leading and trailing edges of adjacent fan blades abutting each other. US 3 687 569 A discloses a support, actuation, and balancing structure for rotor blades in a variable blade.

Providing consistent and small tip clearance in gas turbine engine airfoil members remains an area of interest. Some existing systems have various shortcomings relative to certain applications. Accordingly, there remains a need for further contributions in this area of technology.

### SUMMARY

The subject matter of claim 1 comprises the features of claim 1 to meet the need. Disclosed is a gas turbine engine comprising a variable position airfoil member that includes a hub end having a leading edge and a trailing edge, the variable position airfoil member disposed within a flow path annulus adjacent a radially inner flow path boundary having a concave divot that includes a downstream end in which a radial rate of growth of the downstream end is increasing, wherein the hub end is disposed adjacent an inner wall of the flow path annulus, wherein the inner wall comprises the radially inner flow path boundary, the variable position airfoil member pivotable around an adjustment axis and capable of being moved between a first position and a second position where the first position provides a flow area greater than a flow area in the second position, the hub end offset from the concave divot to permit pivoting movement of the variable position airfoil member without interference from a flow path surface between the first position and the second position, wherein the offset between the flow path surface of the concave divot and the hub end of the variable position airfoil member is constant as the variable position airfoil member moves between the first position and the second position. Further embodiments, forms, features, aspects, benefits, and advantages of the present application shall become apparent from the description and figures provided herewith.

According to an aspect of the disclosure, a gas turbine engine may include a variable position airfoil member displaced from an engine centerline and disposed in a gas path between a radially outer flow path boundary and a radially inner flow path boundary. The variable position airfoil member may have a tip end spaced apart from the radially outer flow path boundary wherein said tip end and said radially outer flow path boundary together form a tip interface. The tip interface may include a spherical interface shape having a spherical radius that extends over an axial range and is characterized by a forward axial end, an axial midpoint, and an aft axial end. The axial midpoint and aft axial end may be located in a region in which the spherical interface shape is descending toward the engine centerline.

In some embodiments, the variable position airfoil member may include a hub end spaced apart from the radially inner flow path boundary. The tip end may be shifted axially aft relative to the hub end. In some embodiments, the forward axial end may be located in a region in which the flow path is expanding away from the engine centerline.

In some embodiments, the variable position airfoil member may include a sweep. A center of gravity of the variable position airfoil member may be located on the adjustment axis.

In some embodiments, the variable position airfoil member may be a variable rotor blade having an adjustment axis. The variable rotor blade may be pivotable about the adjustment axis. A trailing edge at a hub end of the variable rotor blade may include a negative camber.

In some embodiments, the adjustment axis may be in front of a mid-chord location at the tip end. In some embodiments, the variable position airfoil member may include a forward sweep.

In some embodiments, the variable position airfoil member may further include a hub end near the radially inner flow path boundary wherein said hub end and said radially inner flow path boundary together form a hub interface. The variable position airfoil member may be pivotable about a adjustment axis such that the tip end and the hub end are rotatable relative to the radially outer flow path boundary and radially inner flow path boundary. The hub interface may include a hub spherical interface shape having a spherical radius. In some embodiments, the radially inner flow path boundary at the aft end of the variable position airfoil member may descend towards an engine centerline.

According to another aspect of the present disclosure, a gas turbine engine may include a variable position airfoil member that has a hub end having a leading edge and a trailing edge. The variable position airfoil member may be disposed within a flow path annulus adjacent a radially inner flow path boundary having a concave divot that includes a downstream end in which a radial rate of growth of the downstream end is increasing. The variable position airfoil member may be pivotable around an adjustment axis and capable of being moved between a first position and a second position where the first position provides a flow area greater than a flow area in the second position. The hub end may be offset from the concave divot to permit pivoting movement of the variable position airfoil member without interference from the flow path surface between the first position and the second position. The offset between the flow path surface of the concave divot and the hub end of the variable position airfoil member may be constant as the variable vane moves between the first position and the second position.

In some embodiments, the apparatus may further include a plurality of variable position airfoil members associated with a plurality of concave divots distributed around the circumferentially extending flow path surface. A plurality of adjustment axes associated with the plurality of variable position airfoil members may intersect at a common origin. The hub end may have a greater proportion disposed forward of the adjustment axis relative to a proportion of the tip end disposed forward of the adjustment axis.

In some embodiments, the variable position airfoil member may be pivotable between an upper limit position beyond the first position. The offset between the first and second position may be different than the offset between the upper limit position and the first position.

In some embodiments, a solidity of the variable position airfoil members may be less than one. The plurality of concave divots may be separated by a hub surface pitch.

In some embodiments, the hub end may be spherical. The variable position airfoil member may include a tip end that is spherical. The axial extent of spherical shape at the tip end forward of a adjustment axis of the variable position airfoil member may be shifted backward relative to the axial extent of the spherical shape at the hub end forward of the adjustment axis.

In some embodiments, one of the tip offset and hub offset may include a first range of pivot angles such that clearance is substantially constant, and a second range of pivot angles such that clearance in the second range may be variable.

In some embodiments, a forward portion of the variable position airfoil member may include a first forward range of pivot angles over which the offset is constant. An aft portion of the variable position airfoil member may include a first aft range of pivot angles over which the offset is constant. The first forward range may be different than the first aft range. In some embodiments, the adjustment axis may be biased to one side of the concave divot.

According to another aspect of the present disclosure, a method may include a number of operations. The method may include rotating a variable position airfoil member about an engine centerline of a gas turbine engine, the variable position airfoil member having a hub end; pivoting the variable position airfoil member about a adjustment axis to swing from a first position to a second position, the hub end residing in a concave divot formed in a flow path surface, the concave divot having a spherical shape complementary to the hub end of the variable position airfoil member; as a result of the pivoting, sweeping the hub end of the variable position airfoil member across the complementary spherical shape of the concave divot; and maintaining a substantially constant clearance between the hub end of the variable position airfoil member and the spherical shape of the concave divot.

In some embodiments, the pivoting may result in extending a trailing edge of the variable position airfoil member past the concave divot after the variable position airfoil member reaches a first limit angle. In some embodiments, the pivoting may result in extending a leading edge of the variable position airfoil member past the concave divot after the variable position airfoil member reaches a second limit angle.

### BRIEF DESCRIPTION OF THE FIGURES

FIG. 1 depicts one embodiment of a gas turbine engine;
FIG. 2 depicts one embodiment of a variable position airfoil member;
FIG. 3 depicts another embodiment of a variable position airfoil member;
FIGS. 4A and 4B depict embodiments of a variable position airfoil member;
FIG. 5 depicts an embodiment of a concave divot;
FIGS. 6A and 6B depict embodiments of concave divots;
FIG. 7 depicts various embodiments of hub interface shapes; and
FIG. 8 depicts various embodiments of tip interface shapes.

### DETAILED DESCRIPTION OF THE ILLUSTRATIVE EMBODIMENTS

For the purposes of promoting an understanding of the principles of the disclosure, reference will now be made to the embodiments illustrated in the drawings and specific language will be used to describe the same. It will nevertheless be understood that no limitation of the scope of the disclosure is thereby intended. Any alterations and further modifications in the described embodiments, and any further applications of the principles of the disclosure as described herein are contemplated as would normally occur to one skilled in the art to which the disclosure relates.

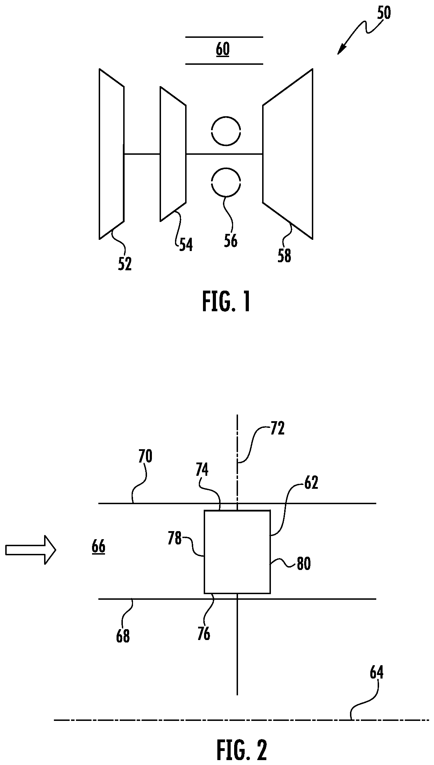

With reference to FIG. 1, one embodiment of a gas turbine engine 50 is depicted which includes a fan 52, a compressor 54, a combustor 56, and a turbine 58. Air is received into and compressed by the compressor 54 prior to being delivered to the combustor 56 where it is mixed with fuel and burned. A flow of air and products of combustion is then delivered to the turbine 58 which expands the flow stream and produces work that is used to drive the compressor 54 as well as to drive the fan 52. The fan 52 is used to develop thrust by accelerating air through a bypass passage 60 which is exhausted out of the rear of the gas turbine engine 50.

The gas turbine engine can be used to provide power to an aircraft and can take any variety of forms. As used herein, the term "aircraft" includes, but is not limited to, helicopters, airplanes, unmanned space vehicles, fixed wing vehicles, variable wing vehicles, rotary wing vehicles, unmanned combat aerial vehicles, tailless aircraft, hover crafts, and other airborne and/or extraterrestrial (spacecraft) vehicles. Further, the present disclosures are contemplated for utilization in other applications that may not be coupled with an aircraft such as, for example, industrial applications, power generation, pumping sets, naval propulsion, weapon systems, security systems, perimeter defense/security systems, and the like known to one of ordinary skill in the art.

Though the gas turbine engine 50 is depicted as a single spool engine, other embodiments can include additional spools. The embodiment of the gas turbine engine 50 depicted in FIG. 1 is in the form of a turbofan engine, but it will be appreciated that some embodiments of the gas turbine engine can take on other forms such as, but not limited to, open rotor, turbojet, turboshaft, and turboprop. In some forms, the gas turbine engine 50 can be a variable cycle and/or adaptive cycle engine.

Turning now to FIG. 2, a variable position airfoil member 62 that can be used in the turbomachinery components of the gas turbine engine 50 is depicted. The variable position airfoil member 62 is an airfoil shaped elongate component that extends across a flow path of the turbomachinery component and which can be used to operate upon a fluid traversing the flow path, such as by changing a direction and/or pressure of the fluid travelling through the flow path.

The embodiment of the variable position airfoil member 62 depicted in FIG. 2 is in the form of a rotatable blade capable of being rotated around the engine centerline 64, but in other embodiments it will be appreciated that the variable position airfoil member 62 may take the form of the stator vane. The variable position airfoil member 62 is disposed in a flow path annulus 66 formed between an inner wall 68 and an outer wall 70 and is capable of being rotated to a pitch angle about the adjustment axis 72. The flow path annulus 66 can be an annular flow path in many embodiments. The variable position airfoil member includes a tip end 74 disposed adjacent the outer wall 70, and a hub end 76 disposed adjacent the inner wall 68.

The inner wall 68, outer wall 70, tip end 74, and hub end 76 are illustrated for purposes of convenience as straight lines, but as will be discussed further below one or more of the walls 68, 70 and ends 74, 76 will have a spherical shape to provide for a substantially constant clearance over a wide range of pivoting action of the variable position airfoil member 62. To set forth just one non-limiting example, the outer wall 70 and tip end 74 can have complementary spherical shapes, while the inner wall 68 and hub end 76 do not. It is also possible for both outer and inner walls 70, 68 to have spherical shapes. As used herein, the term "spherical" will be understood to include those shapes that are substantially spherical to provide for a substantially constant clearance over the wide range of pivoting the action of the variable position airfoil member 62. To set forth just a few non-limiting examples, some variation in the shape of the interface will be recognized for manufacturing tolerances and service wear.

The spherical shape at the tip and hub ends of the variable position airfoil member 62 can be concave or convex on either or both tip and hub. For example, in the embodiment depicted in figure 2, the tip end of the variable position airfoil member 62 can have a convex shape such that the flow path extends up and away from the hub end 76 at a leading edge 78 of the variable position airfoil member before reaching an apex and descending back towards the hub and 76 at a trailing edge 80 of the variable position airfoil member 62. Various other possibilities will be appreciated from this singular example. For example, the tip end 74 can have a concave shape, the hub end 76 can have a convex shape, and the hub end 76 in other embodiments can have a concave shape. Thus, any variation of concave and convex shapes can be used on either or both of the tip end 74 and hub end 76. Furthermore, the ends 74, 76 can both be either a concave or convex shape, while in other embodiments one of the ends 74, 76 can be concave while the other of the ends 74, 76 can be convex.

The relative placement of the concave and convex shape will determine whether the shape is extending away from or toward the engine centerline 64. For example, if the outer wall 70 is concave, part of that surface may extend away from the engine centerline while another part is extending toward the engine centerline. Such a situation is present when the outer wall 70 is at the same radial distance from the engine centerline 64 on both sides of the concave spherical shape.

Separate and apart from the shape of the walls 68 and 70 and whether or not the walls are extending toward or away from the engine centerline 64, the area of the flow path annulus can also be increasing or decreasing due in large part to the interdependent nature of flow path area with outer radius and inner radius. In various embodiments, the cross sectional area may be increasing or decreasing as a function of axial location depending on the relative nature of the spherical shapes at one or both of the walls 68 and 70. No limitation on the nature of the cross sectional area is intended unless expressly stated to the contrary.

Though the variable position airfoil member 62 is shown for convenience as a quadrilateral, it will be appreciated that the variable position airfoil member 62 can have any variety of characteristics associated with any number of variable position airfoil members used in gas turbine engines. For example, the variable position airfoil member 62 can include sweep, lean, twist, etc. Furthermore, the variable position airfoil member 62 can have any variety of orientations of its characteristics (sweep, lean, twist, etc) relative to any variety of features (e.g. adjustment axis, leading and trailing edges, etc.) of the variable position airfoil member 62. For example, the tip end 74 and the hub end 76 can be located relative to the adjustment axis 72 such that a greater proportion of either of the tip and 74 or the hub end 76 is disposed either forward or aft of the adjustment axis 72. Other embodiments will be described further below.

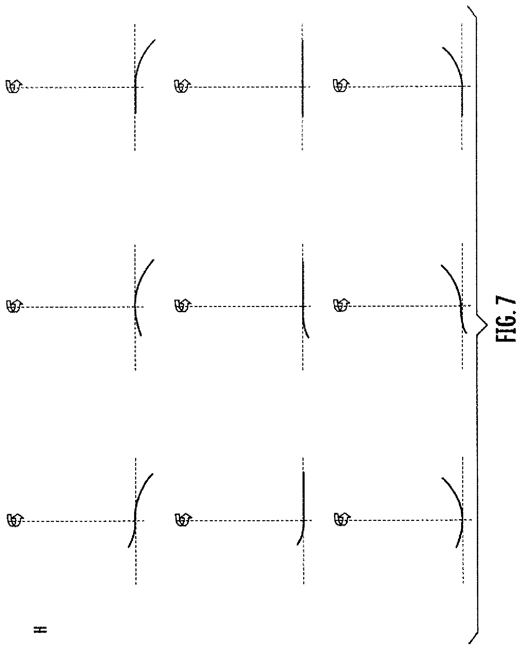

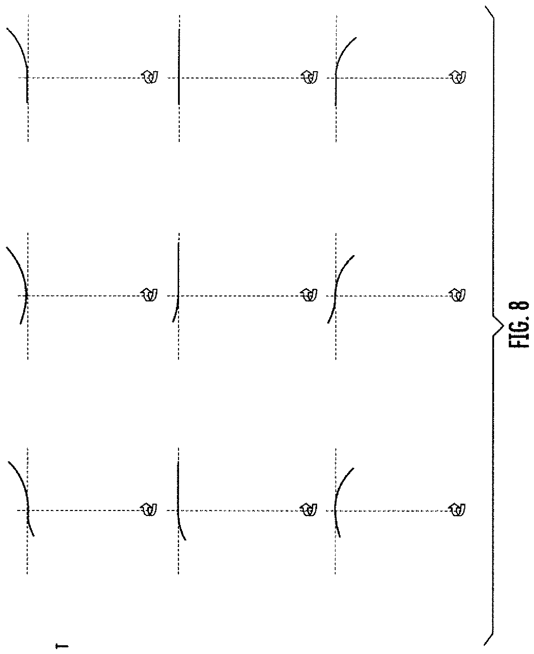

The spherical shape can occur in any range between the leading edge 78 and trailing edge 80 including the entire range between leading and trailing edge. In some forms, a spherical shape can be located between the leading edge and a point between the leading edge and trailing edge (e.g. a pivot between the leading edge and trailing edge), and another spherical shape with a different radius can be located between the midpoint and the trailing edge. In fact, the different spherical shapes can be a mixture of concave and convex spherical shapes. To set forth just one non-limiting example, the forward spherical shape can be concave and the aft spherical shape can be convex. FIGS. 7 and 8 set forth a few non-limiting examples of having spherical shapes forward and aft of the adjustment axis, whether the shapes are a mixture of concave, convex, or wholly concave or convex. The shapes can have the same or different radii. The arrow indicates rotation about the adjustment axis in either direction. The various figures also illustrate a combination of spherical shapes and linear shapes that also produce very little gap when the member is pivoted about the adjustment axis. The straight line, or linear, segments can be either forward or aft of the adjustment axis, or both forward and aft. It will be appreciated that any particular hub side geometry depicted in any of the nine separate variations of FIG. 7 can be paired with any particular tip side geometry depicted in any of the nine separate variations in FIG. 8. The letter "H" in figure 7 means "HUB ANNULUS LINES". The letter "T" in figure 8 means "TIP ANNULUS LINES".

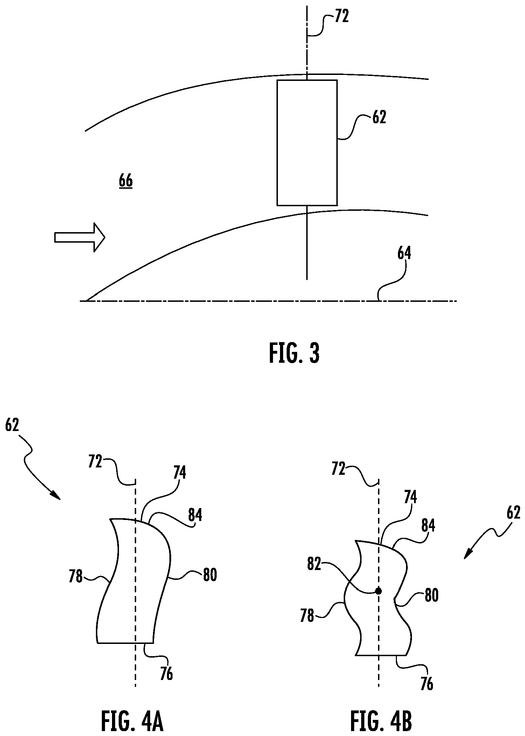

Turning now to FIG. 3, one embodiment of the variable position airfoil member is shown as a fan blade 62 capable of pivoting about adjustment axis 72 and rotatable about the engine centerline 64. The flow path annulus 66 is bounded by a hub that generally extends away from the engine centerline 64 at an upstream end until reaching an apex before descending towards the engine centerline 64. The fan blade 62 is depicted as being located near an apex of the hub, but in other forms the fan blade 62 can be located further forward on the hub or further aft.

Turning now to FIGS. 4A and 4B, two separate embodiments of the fan blades 62 are depicted, both of which include a spherical tip end 74. Each of the fan blades 62 illustrated in FIG. 4A and FIG. 4B include compound sweep distributions with the primary difference being that the embodiment in FIG. 4A includes a rearward sweep near the hub end 76 and a forward sweep at the tip end 74, while the embodiment and FIG. 4B initially includes a rearward sweep at the hub followed by successive forward sweep, rearward sweep, and finally forward sweep at the tip. Another difference is that the adjustment axis 72 of the embodiment depicted in FIG. 4B passes through a center of gravity 82 of the fan blade 62. While both embodiments depict compound sweep distributions, other forms of the fan blade 62 could consist of backward sweep only.

Turning now to some similarities between FIG. 4A and FIG. 4B, it will be noted that the tip in 74 is shifted axially aft relative to the hub end 76. For example, the leading edge of the tip end 74 is shifted back axially relative to the leading edge of the hub end 76. The arrangement depicted in FIG. 4A and FIG. 4B also permits the spherical shape at the tip end 74 to have mostly contraction which permits higher fan pressure ratios for a given diameter relative to a flow path with lesser contraction. A descending flow path can also minimize engine length, and thus engine weight, because the duct downstream of the fan blade 62 can be shorter and the core vane, sometimes referred to as the ESS, can be on a descending flow path. Having the ESS on the descending flow path can reduce the extreme radius change in the duct given that the starting radius is reduced.

The spherical shape at the tip end 74 includes an apex at the adjustment axis 72. Given that the adjustment axis 72 is located towards the leading edge 78 forward of a midpoint between the leading edge 78 and the trailing edge 80, the portion of the spherical shape located between the leading edge 78 and the adjustment axis 72 is smaller relative to the portion of the spherical shape located between the adjustment axis 72 and the trailing edge 80. The midpoint 84 can represent half the arc distance of the spherical shape at the tip end 74 between the leading edge 78 and trailing edge 80.

In one embodiment of the fan blade 62 illustrated in FIGS. 4A and 4B, several aerodynamic considerations can be taken into account improve operation. For example, the fan hub pressure ratio can be limited to avoid separating the flow at the trailing edge 80 of the fan blade 62. To accommodate this, all of the turning of the flow in the hub region near the leading edge 78 can be accomplished and negative camber can be included in the airfoil to keep airflow attached at the trailing edge.

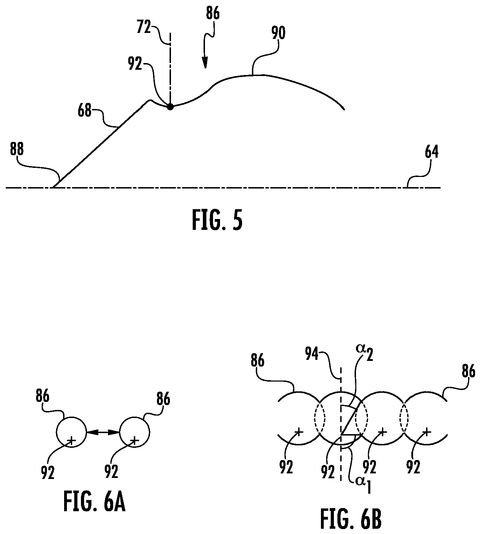

FIG. 5 depicts an embodiment of the inner wall 68 in the form of a turbofan spinner having a concave divot 86 formed downstream of a tip 88 of the spinner. The concave divot 86 can include a spherical shape as will be appreciated given some of the discussion above. The concave divot 86 is formed upstream of an apex 90 associated with the turbofan flow path, but it will be appreciated that the concave divot 86 can be formed in any variety of locations including at the apex 90 and downstream of it. The concave divot 86 includes a spherical shape size to receive a complementary circle shaped hub end 76 of a fan blade 62 (not shown). Also depicted in FIG. 5 is a pivot 92 through which the adjustment axis 72 extends. The pivot 92 is shown located in a relatively forward portion of the concave divot 86, but in other embodiments the pivot 92 can be placed in other locations of the concave divot 86. In addition, the adjustment axis 72 is illustrated at a right angle to the engine centerline 64, but in other embodiments the adjustment axis 72 can be oriented at other angles relative to the engine centerline 64.

Turning now to FIGS. 6A and 6B, two separate embodiments are shown of a gas turbine engine having a plurality of concave divots 86 disposed circumferentially about an annular flow path. The embodiment depicted in FIG. 6A illustrates concave divots 86 separated by a distance that can be referred to as a pitch. The distance, or pitch, between concave divots 86 can be determined based upon solidity of variable position airfoil members 62, among other things. Though the concave divots 86 are not limited to any particular form of the variable position airfoil member 62, in one non-limiting embodiment the concave divots 86 are used with a fan blade 62 at the hub location that suggested above in FIG. 5.

FIG. 6B illustrates concave divots 86 that are spaced close enough together such that the concave divots 86 overlap one another. The dashed lines depicted in FIG. 6B illustrate what would be nominal contour lines of respective concave divots 86 were it not for the overlap with a neighboring concave divot 86. Overlapping concave divots 86 may occur when solidity is greater than 1.0. Two separate angles are also illustrated in FIG. 6B. An angle *α*₁ illustrates an angle measured from the pivot 92 between a reference axis 94 and a location that a leading edge 78 of the variable position airfoil member 62 would intersect a forward concave divot overlap between adjacent concave divots 86. Likewise, angle *α*₂ illustrates an angle measured from the pivot 92 between a reference axis 94 and a location that a trailing edge 80 of the variable position airfoil member 62 would intersect an aft concave divot overlap between adjacent concave divots 86. The reference axis 94 can be any axis useful to measure concave divot overlaps, and, in one form, is the engine centerline 64. The angles *α*₁ and *α*₂ can be calculated based on solidity, blade count, and adjustment axis location to ensure that certain performance critical points have tight clearances between the variable position airfoil member 62 and a surface of the concave divot 86. Operation of the variable position airfoil member 62 at a location in which at least portion of it extends past the concave divot overlap angles is still acceptable at other performance points where inefficiency may be less important. For example, reverse pitch operation for generation of reverse thrust may be an example of operation of the variable position airfoil member 62 in which it extends past the concave divot overlap angle. The angles *α*₁ and *α*₂ can be the same in some embodiment, but will be different in others as shown in the illustrated embodiment. In one particular form, the angles *α*₁ and *α*₂ are different when the pivot 92, and corresponding adjustment axis 72, are placed forward of a mid-chord location of the variable position airfoil member 62.

Any of the embodiments disclosed herein of the particular arrangement of the tip can be used with any of the embodiments disclosed herein of the particular arrangement of the hub. For example, axially displacing the tip end 74 relative to the hub end 76 where the tip in 74 includes mostly contraction, and combining that arrangement with the hub end 76 in which the adjustment axis is placed in front of the mid-chord location at the hub end 76. This combination can include concave or convex vertical shape at the hub end 76. Any variety of other combinations is also contemplated.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

## Claims

1. A gas turbine engine (50) comprising
a variable position airfoil member (62) that includes a hub end (76) having a leading edge (78) and a trailing edge (80), the variable position airfoil member (62) disposed within a flow path annulus (66) adjacent a radially inner flow path boundary having a concave divot (86) that includes a downstream end in which a radial rate of growth of the downstream end is increasing, wherein the hub end (76) is disposed adjacent an inner wall (68) of the flow path annulus (66), wherein the inner wall (68) comprises the radially inner flow path boundary, the variable position airfoil member (62) pivotable around an adjustment axis (72) and capable of being moved between a first position and a second position where the first position provides a flow area greater than a flow area in the second position, the hub end (76) offset from the concave divot (86) to permit pivoting movement of the variable position airfoil member (62) without interference from a flow path surface between the first position and the second position, wherein the offset between the flow path surface of the concave divot (86) and the hub end (76) of the variable position airfoil member (62) is constant as the variable position airfoil member (62) moves between the first position and the second position.

2. The gas turbine engine (50) of claim 1, which further includes a plurality of variable position airfoil members (62) associated with a plurality of concave divots (86) distributed around a circumferentially extending flow path surface, and wherein a plurality of adjustment axes (72) associated with the plurality of variable position airfoil members (62) intersect at a common origin, and wherein the hub end (76) has a greater proportion disposed forward of the adjustment axis (72) relative to a proportion of a tip end (74) disposed forward of the adjustment axis (72).

3. The gas turbine engine (50) of claim 1, wherein the hub end (76) is spherical, the variable position airfoil member (62) includes a tip end (74) that is spherical, and an axial extent of spherical shape at the tip end (74) forward of the adjustment axis of the variable position airfoil member (62) is shifted backward relative to an axial extent of a spherical shape at the hub end (76) forward of the adjustment axis.

4. The gas turbine engine (50) of claim 3, wherein one of a tip offset and hub offset includes a first range of pivot angles such that clearance is substantially constant and a second range of pivot angles such that clearance in the second range is variable,
wherein a forward portion of the variable position airfoil member (62) includes a first forward range of pivot angles over which the offset is constant and an aft portion of the variable position airfoil member (62) includes a first aft range of pivot angles over which the offset is constant and the first forward range is different than the first aft range.

5. The gas turbine engine (50) of claim 1, wherein the variable position airfoil member (62) is displaced from an engine centerline (64) and disposed in the flow path annulus (66) between a radially outer flow path boundary (70) and the radially inner flow path boundary, the variable position airfoil member (62) having a tip end (74) spaced apart from the radially outer flow path boundary (70) wherein said tip end (74) and said radially outer flow path boundary (70) together form a tip interface,
wherein the tip interface includes a spherical interface shape having a spherical radius that extends over an axial range and is **characterized by** a forward axial end, an axial midpoint (84), and an aft axial end, the axial midpoint (84) and aft axial end located in a region in which the spherical interface shape is descending toward the engine centerline (64),
wherein the variable position airfoil member (62) includes the hub end (76) spaced apart from the radially inner flow path boundary and the tip end (74) is shifted axially aft relative to the hub end (76).

6. The gas turbine engine of claim 5, wherein a leading edge of the tip end is shifted back axially relative to the leading edge (78) of the hub end (76).

7. The gas turbine engine (50) of claim 5 or 6, wherein the forward axial end is located in a region in which the flow path is expanding away from the engine centerline (64).

8. The gas turbine engine (50) of one of the preceding claims, wherein the variable position airfoil member (62) includes a sweep and a center of gravity (82) of the variable position airfoil member (62) is located on the adjustment axis (72).

9. The gas turbine engine (50) of claim 1, wherein the adjustment axis (72) is in front of a mid-chord location at a tip end (74).

10. The gas turbine engine (50) of claim 8, wherein the variable position airfoil member (62) includes a forward sweep.

11. The gas turbine engine (50) of claim 5, wherein the variable position airfoil member (62) further includes the hub end (76) near the radially inner flow path boundary wherein said hub end (76) and said radially inner flow path boundary together form a hub interface, the variable position airfoil member (62) is pivotable about the adjustment axis (72) such that the tip end (74) and the hub end (76) are rotatable relative to the radially outer flow path boundary (70) and radially inner flow path boundary, and the hub interface includes a hub spherical interface shape having a spherical radius.

12. The gas turbine engine (50) of claim 5, the radially inner flow path boundary at an aft end of the variable position airfoil member (62) descends towards the engine centerline (64).

13. A method comprising the gas turbine engine (50) according to one of the preceding claims,
rotating the variable position airfoil member (62) about an engine centerline (64) of the gas turbine engine (50), wherein the hub end (76) of the variable position airfoil member (62) is spherical,
pivoting the variable position airfoil member (62) about the adjustment axis (72) to swing from the first position to the second position, the hub end (76) residing in the concave divot (86) formed in the flow path surface, the concave divot (86) having a spherical shape complementary to the hub end (76) of the variable position airfoil member (62),
as a result of the pivoting, sweeping the hub end (76) of the variable position airfoil member (62) across a complementary spherical shape of the concave divot (86), and
maintaining a substantially constant clearance between the hub end (76) of the variable position airfoil member (62) and the complementary spherical shape of the concave divot (86).

## Patentansprüche

1. Eine Gasturbinenmaschine (50), umfassend
ein variabel positionierbares Flügelelement (62), das ein Nabenende (76) mit einer Vorderkante (78) und einer Hinterkante (80) enthält, wobei das variabel positionierbare Flügelelement (62) in einem Fließweg-Ringraum (66) angeordnet ist, der einer radial inneren Fließweg-Begrenzung benachbart ist, die eine konkave Mulde (86) aufweist, die ein stromabwärtiges Ende enthält, in dem eine radiale Wachstumsrate des stromabwärtigen Endes zunimmt, wobei das Nabenende (76) benachbart einer Innenwand (68) des Fließweg-Ringraums (66) angeordnet ist, wobei die Innenwand (68) die radial innere Fließweg-Begrenzung umfasst, das variabel positionierbare Flügelelement (62) ist um eine Einstellachse (72) schwenkbar und geeignet, zwischen einer ersten Position und einer zweiten Position bewegt zu werden, wobei die erste Position eine Strömungsfläche bereitstellt, die größer ist als eine Strömungsfläche in der zweiten Position, das Nabenende (76) ist von der konkaven Mulde (86) versetzt, um eine Schwenkbewegung des variabel positionierbaren Flügelelements (62) ohne Störung durch eine Fließweg-Oberfläche zwischen der ersten Position und der zweiten Position zu ermöglichen, wobei der Versatz zwischen der Fließweg-Oberfläche der konkaven Mulde (86) und dem Nabenende (76) des variabel positionierbaren Flügelelements (62) konstant ist, wenn sich das variabel positionierbare Flügelelement (62) zwischen der ersten Position und der zweiten Position bewegt.

2. Die Gasturbinenmaschine (50) aus Anspruch 1, die ferner eine Vielzahl von variabel positionierbaren Flügelelementen (62) enthält, die einer Vielzahl von konkaven Mulden (86) zugeordnet sind, die um eine sich in Umfangsrichtung erstreckende Fließweg-Oberfläche verteilt sind, und wobei eine Vielzahl von Einstellachsen (72), die der Vielzahl von variabel positionierbaren Flügelelementen (62) zugeordnet sind, sich an einem gemeinsamen Ursprung schneiden, und wobei das Nabenende (76) einen vor der Einstellachse (72) angeordneten Anteil aufweist, der größer ist als ein vor der Einstellachse (72) angeordneter Anteil eines Kopfendes (74).

3. Die Gasturbinenmaschine (50) aus Anspruch 1, wobei das Nabenende (76) kugelförmig ist, das variabel positionierbare Flügelelement (62) ein kugelförmiges Kopfende (74) aufweist, und eine axiale Ausdehnung der Kugelform am Kopfende (74) vor der Einstellachse des variabel positionierbaren Flügelelements (62) relativ zu einer axialen Ausdehnung einer Kugelform an dem Nabenende (76) vor der Einstellachse nach hinten verschoben ist.

4. Die Gasturbinenmaschine (50) aus Anspruch 3, wobei einer aus einem Spitzenversatz und einem Nabenversatz einen ersten Bereich von Schwenkwinkeln, so dass das Spiel im Wesentlichen konstant ist, und einen zweiten Bereich von Schwenkwinkeln enthält, so dass das Spiel im zweiten Bereich variabel ist,
wobei ein vorderer Abschnitt des variabel positionierbaren Flügelelements (62) einen ersten vorderen Bereich von Schwenkwinkeln enthält, über den der Versatz konstant ist, und ein hinterer Abschnitt der variabel positionierbaren Flügelelemente (62) einen ersten hinteren Bereich von Schwenkwinkeln enthält, über den der Versatz konstant ist und der erste vordere Bereich sich von dem ersten hinteren Bereich unterscheidet.

5. Die Gasturbinenmaschine (50) aus Anspruch 1, wobei das variabel positionierbare Flügelelement (62) von einer Maschinenmittellinie (64) versetzt und im Fließweg-Ringraum (66) zwischen einer radial äußeren Fließweg-Begrenzung (70) und der radial inneren Fließweg-Begrenzung angeordnet ist, wobei das variabel positionierbare Flügelelement (62) ein Kopfende (74) aufweist, das von der radial äußeren Fließweg-Begrenzung (70) beabstandet ist, wobei das Kopfende (74) und die radial äußere Fließweg-Begrenzung (70) zusammen eine Kopfgrenzfläche bilden,
wobei die Kopfgrenzfläche eine kugelförmige Grenzflächenform mit einem kugelförmigen Radius enthält, die sich über einen axialen Bereich erstreckt und **gekennzeichnet ist durch** ein vorderes axiales Ende, einen axialen Mittelpunkt (84) und ein hinteres axiales Ende, wobei der axiale Mittelpunkt (84) und das hintere axiale Ende in einem Bereich angeordnet sind, in dem die kugelförmige Grenzflächenform in Richtung der Maschinenmittellinie (64) abfällt,
wobei das variabel positionierbare Flügelelement (62) das von der radial inneren Fließweg-Begrenzung beabstandete Nabenende (76) enthält und das Kopfende (74) relativ zum Nabenende (76) axial nach hinten verschoben ist.

6. Die Gasturbinenmaschine aus Anspruch 5, wobei eine Vorderkante des Kopfendes axial gegenüber der Vorderkante (78) des Nabenendes (76) zurückversetzt ist.

7. Gasturbinenmaschine (50) aus Anspruch 5 oder 6, wobei das vordere axiale Ende in einem Bereich angeordnet ist, in dem sich der Fließweg von der Maschinenmittellinie (64) weg ausdehnt.

8. Die Gasturbinenmaschine (50) aus einem der vorhergehenden Ansprüche, wobei das variabel positionierbare Flügelelement (62) eine Pfeilung enthält und ein Masseschwerpunkt (82) des variabel positionierbaren Flügelelements (62) auf der Einstellachse (72) angeordnet ist.

9. Die Gasturbinenmaschine (50) aus Anspruch 1, wobei sich die Einstellachse (72) vor einer Stelle in der Sehnenmitte an einem Kopfende (74) befindet.

10. Die Gasturbinenmaschine (50) aus Anspruch 8, wobei das variabel positionierbare Flügelelement (62) eine Vorwärtspfeilung enthält.

11. Die Gasturbinenmaschine (50) aus Anspruch 5, wobei das variabel positionierbare Flügelelement (62) ferner das Nabenende (76) nahe der radial inneren Fließweg-Begrenzung umfasst, wobei das Nabenende (76) und die radial innere Fließweg-Begrenzung zusammen eine Nabengrenzfläche bilden, das variabel positionierbare Flügelelement (62) um die Einstellachse (72) schwenkbar ist, so dass das Kopfende (74) und das Nabenende (76) relativ zur radial äußeren Fließweg-Begrenzung (70) und zur radial inneren Fließweg-Begrenzung drehbar sind, und die Nabengrenzfläche eine kugelförmige Nabengrenzflächenform mit einem kugelförmigen Radius enthält.

12. Die Gasturbinenmaschine (50) aus Anspruch 5, die radial innere Fließweg-Begrenzung an einem hinteren Ende des variabel positionierbaren Flügelelements (62) fällt in Richtung der Maschinenmittellinie (64) ab.

13. Ein Verfahren umfassend die Gasturbinenmaschine (50) gemäß einem der vorhergehenden Ansprüche,
Drehen des variabel positionierbaren Flügelelements (62) um eine Maschinenmittellinie (64) der Gasturbinenmaschine (50), wobei das Nabenende (76) des variabel positionierbaren Flügelelements (62) kugelförmig ist,
Schwenken des variabel positionierbaren Flügelelements (62) um die Einstellachse (72), um von der ersten Position in die zweite Position zu schwenken, wobei das Nabenende (76) in der in der Fließweg-Oberfläche gebildeten konkaven Mulde (86) liegt, wobei die konkave Mulde (86) eine kugelförmige Form hat, die komplementär zum Nabenende (76) des variabel positionierbaren Flügelelements (62) ist,
als Folge des Schwenkens, Streichen des Nabenendes (76) des variabel positionierbaren Flügelelements (62) über eine komplementäre kugelförmige Form der konkaven Mulde (86), und
Aufrechterhalten eines im wesentlichen konstanten Spiels zwischen dem Nabenende (76) des variabel positionierbaren Flügelelements (62) und der komplementären kugelförmigen Form der konkaven Mulde (86).

## Revendications

1. Moteur à turbine à gaz (50) comprenant
un membre d'aube à position variable (62), qui comprend une extrémité de moyeu (76) ayant un bord avant (78) et un bord arrière (80), le membre d'aube à position variable (62) étant disposé à l'intérieur d'un anneau de trajet de flux (66) adjacent à une limite de trajet de flux radialement intérieure ayant une motte concave (86), qui comprend une extrémité aval, dans laquelle un taux de croissance radiale de l'extrémité aval augmente, dans lequel l'extrémité de moyeu (76) est disposée adjacente à la paroi intérieure (68) de l'anneau de trajet de flux (66), la paroi intérieure (68) comprenant la limite de trajet de flux radialement intérieure, le membre d'aube à position variable (62) étant pivotant autour d'un axe de réglage (72) et capable d'être déplacé entre une première position et une deuxième position, dans lequel la première position fournit une plus grande zone de flux qu'une zone de flux dans la deuxième position, l'extrémité de moyeu (76) étant décalée de la motte concave (86) pour permettre le mouvement pivotant du membre d'aube à position variable (62) sans interférence d'une surface de trajet de flux entre la première position et la deuxième position, dans lequel le décalage entre la surface de trajet de flux de la motte concave (86) et l'extrémité de moyeu (76) du membre d'aube à position variable (62) est constant quand le membre d'aube à position variable (62) se déplace entre la première position et la deuxième position.

2. Moteur à turbine à gaz (50) selon la revendication 1, qui comprend en outre une pluralité de membres d'aube à position variable (62) associés à une pluralité de mottes concaves (86) distribuées autour d'une surface de trajet de flux, qui s'étend de manière circonférentielle, et dans lequel une pluralité d'axes de réglage (72) associés à la pluralité de membres d'aube à position variable (62) se croisent à une origine commune, et dans lequel l'extrémité de moyeu (76) a une plus grande proportion disposée an avant de l'axe de réglage (72) par rapport à une proportion d'une extrémité de pointe (74) disposée en avant de l'axe de réglage (72).

3. Moteur à turbine à gaz (50) selon la revendication 1, dans lequel l'extrémité de moyeu (76) est sphérique, le membre d'aube à position variable (62) comprend une extrémité de pointe (74), qui est sphérique, et une extension axiale en forme sphérique à l'extrémité de pointe (74) en avant de l'axe de réglage du membre d'aube à position variable (62) est décalée en arrière par rapport à une extension axiale en forme sphérique à l'extrémité de moyeu (76) en avant de l'axe de réglage.

4. Moteur à turbine à gaz (50) selon la revendication 3, dans lequel l'un d'un décalage de pointe et d'un décalage de moyeu comprend une première plage d'angles de pivotement, de sorte que l'espace libre est essentiellement constant, et une deuxième plage d'angles de pivotement, de sorte que l'espace libre dans la deuxième plage est variable,
dans lequel une partie avant du membre d'aube à position variable (62) comprend une première plage avant d'angles de pivotement, dans laquelle le décalage est constant, et une partie arrière du membre d'aube à position variable (62) comprend une première plage arrière d'angles de pivotement, dans laquelle le décalage est constant, et la première plage avant est différente de la première plage arrière.

5. Moteur à turbine à gaz (50) selon la revendication 1, dans lequel le membre d'aube à position variable (62) est déplacé à partir d'une ligne médiane de moteur (64) et disposé dans l'anneau de trajet de flux (66) entre une limite de trajet de flux radialement extérieure (70) et la limite de trajet de flux radialement intérieure, le membre d'aube à position variable (62) ayant une extrémité de pointe (74) espacée de la limite de trajet de flux radialement extérieure (70), dans lequel ladite extrémité de pointe (74) et ladite limite de trajet de flux radialement extérieure (70) forment ensemble une interface de pointe,
dans lequel l'interface de pointe comprend une forme de surface sphérique ayant un rayon sphérique, qui s'étend sur une zone axiale, et elle est **caractérisée par** une extrémité axiale avant, un point médian axial (84) et une extrémité axiale arrière, le point médian axial (84) et l'extrémité axiale arrière étant situés dans une région, où la forme d'interface sphérique descend vers la ligne médiane de moteur (64),
dans lequel le membre d'aube à position variable (62) comprend l'extrémité de moyeu (76) espacée de la limite de trajet de flux radialement intérieure et l'extrémité de pointe (74) est déplacée axialement vers l'arrière par rapport à l'extrémité de moyeu (76).

6. Moteur à turbine à gaz selon la revendication 5, dans lequel un bord avant de l'extrémité de pointe est déplacé axialement vers l'arrière par rapport au bord avant (78) de l'extrémité de moyeu (76).

7. Moteur à turbine à gaz (50) selon la revendication 5 ou la revendication 6, dans lequel l'extrémité axiale avant est située dans une région, dans laquelle le trajet de flux se dilate et se sépare de la ligne médiane de moteur (64).

8. Moteur à turbine à gaz (50) selon l'une des revendications précédentes, dans lequel le membre d'aube à position variable (62) comprend une courbe, et un centre de gravité (82) du membre d'aube à position variable (62) est situé sur l'axe de réglage (72).

9. Moteur à turbine à gaz selon la revendication 1, dans lequel l'axe de réglage (72) se trouve devant un point médian à l'extrémité de pointe (74).

10. Moteur à turbine à gaz (50) selon la revendication 8, dans lequel le membre d'aube à position variable (62) comprend une courbe avant.

11. Moteur à turbine à gaz (50) selon la revendication 5, dans lequel le membre d'aube à position variable (62) comprend en outre l'extrémité de moyeu (76) proche de la limite de trajet de flux radialement intérieure, dans lequel ladite extrémité de moyeu (76) et ladite limite de trajet de flux radialement intérieure forment ensemble une interface de moyeu, le membre d'aube à position variable (62) est pivotant autour de l'axe de réglage (72), de sorte que l'extrémité de pointe (74) et l'extrémité de moyeu (76) peuvent tourner par rapport à la limite de trajet de flux radialement extérieure (70) et par rapport à la limite de trajet de flux radialement intérieure, et l'interface de moyeu comprend une forme d'interface de moyeu sphérique ayant un rayon sphérique.

12. Moteur à turbine à gaz (50) selon la revendication 5, dans lequel la limite de trajet de flux radialement intérieure descend à une extrémité arrière du membre d'aube à position variable (62) vers la ligne médiane de moteur (64).

13. Procédé comprenant le moteur à turbine à gaz selon l'une des revendications précédentes, et comprenant les étapes de :
faire tourner le membre d'aube à position variable (62) autour d'une ligne médiane de moteur (64) du moteur à turbine à gaz (50), dans lequel l'extrémité de moyeu (76) du membre d'aube à position variable (62) est sphérique,
faire pivoter le membre d'aube à position variable (62) autour de l'axe de réglage (72) pour glisser de la première position à la deuxième position, l'extrémité de moyeu (76) se trouvant dans la motte concave (86) formée dans la surface de trajet de flux, la motte concave (86) ayant une forme sphérique complémentaire à l'extrémité de moyeu du membre d'aube à position variable (62),
comme résultat du pivotement, faire déplacer l'extrémité de moyeu (76) du membre d'aube à position variable (62) sur une forme sphérique complémentaire de la motte concave (86), et
maintenir un espace libre essentiellement constant entre l'extrémité de moyeu (76) du membre d'aube à position variable (62) et la forme sphérique complémentaire de la motte concave (86).
